# EUROPEAN PATENT APPLICATION

(11) **EP 4 804 299 A1**
(43) Date of publication of application: **09.09.2026**
(21) Application number: 24885525.6
(22) Date of filing: 22.10.2024
(51) Int. Cl.: H01M 50/107, H01M 10/04, H01M 10/0587, H01M 50/152, H01M 50/166, H01M 50/167, H01M 50/184, H01M 50/531, H01M 50/545

(54) **CYLINDRICAL SECONDARY BATTERY**

(30) Priority: 31.10.2023 JP 2023187076
(71) Applicant: Panasonic Intellectual Property Management Co., Ltd., Kadoma-shi, Osaka 571-0057 (JP)
(72) Inventor: IMAIZUMI, Raiji, Kadoma-shi Osaka 571-0057 (JP)
(74) Representative: Eisenführ Speiser
(86) International application number: PCT/JP2024/037485
(87) International publication number: WO 2025/094752

(57) **Abstract**

This cylindrical secondary battery (10) includes an electrode group (14), a current collector which is connected to the electrode group, a sealing body (19) which is disposed on the upper side of the electrode group and to which the current collector is connected, and a bottomed cylindrical battery can (20) which houses the electrode group. The sealing body is fixed to the inside of the opening-side end of the battery can in the axial direction, and closes the opening of the battery can. A cap (40) is attached to the opening-side end of the battery can. The cap has: a cylinder part (41) which has a female screw (43) on the inner peripheral surface; and a pressing plate part (42) that is continuous with one end of the cylinder part and is pressed against the outer side of the opening-side end of the battery can in the axial direction. The battery can has a male screw (53) on the outer peripheral surface. The battery can and the cap are screw-coupled with each other by means of the female screw and the male screw.

## Description

### TECHNICAL FIELD

The present disclosure relates to a cylindrical secondary battery, and more particularly to an improvement in pressure resistance performance of a battery comprising a battery can with a bottomed cylindrical shape and a sealing assembly that has a function as an electrode terminal.

### BACKGROUND ART

Conventionally, a configuration comprising an electrode group, a battery can with a bottomed cylindrical shape that accommodates the electrode group, and a sealing assembly that blocks an opening of the battery can has been known as a cylindrical secondary battery. The electrode group is connected to the sealing assembly via a current collector. In this manner, the sealing assembly functions as an electrode terminal. Patent Literature 1 describes a cylindrical secondary battery with an opening of a battery can blocked by a sealing assembly by the sealing assembly being crimped and fixed to an end portion of the battery can via a gasket made of a resin with an insulation property.

### CITATION LIST

### PATENT LITERATURE

PATENT LITERATURE 1: Japanese Unexamined Patent Application Publication No. 2008-204839

### SUMMARY

In a cylindrical secondary battery with an opening of a battery can blocked by a sealing assembly as in the configuration described in Patent Literature 1, a side end portion of the opening of the battery can is crimped, and the sealing assembly is crimped and fixed to the side end portion of the opening in order to prevent the sealing assembly from falling off from the battery can due to an increase in inner pressure due to abnormality such as internal short circuit in the battery.

On the other hand, development of a battery with a further increased energy density has been required in recent years. In such a case where an energy density of a battery is increased, an inner pressure when abnormality occurs in the battery increases. Therefore, the crimped portion at the side end portion of the opening of the battery can may open, and the closed opening of the battery can may be unexpectedly opened. For this reason, an improvement in pressure resistance performance of the battery is desired.

Thus, it is an advantage of the present disclosure to provide a cylindrical secondary battery capable of improving pressure resistance performance in a configuration in which an opening of a battery can with a bottomed cylindrical shape is blocked by a sealing assembly that has a function as an electrode assembly.

A cylindrical secondary battery according to the present disclosure is a cylindrical secondary battery comprising: an electrode group in which a positive electrode and a negative electrode are wound via separators; a current collector that is connected to the electrode group; a sealing assembly that is disposed above the electrode group, the current collector being connected to the sealing assembly, the sealing assembly having a function as an electrode terminal; and a battery can with a bottomed cylindrical shape that accommodates the electrode group, in which the sealing assembly is fixed to an inner side in an axial direction of an opening side end portion of the battery can and blocks an opening of the battery can, a cap is attached to the opening side end portion of the battery can, the cap has a tubular portion that has a female screw on an inner circumferential surface and a pressing plate portion that is provided to continue from one end of the tubular portion and follow the radial direction toward the inner side in the radial direction and is pressed against an outer side in the axial direction of the opening side end portion of the battery can, the battery can has a male screw on an outer circumferential surface, and the battery can and the cap are screw-coupled between the female screw and the male screw.

According to the cylindrical secondary battery of the present disclosure, the cap is attached to the opening side end portion of the battery can through screw coupling, and the pressing plate portion of the cap is pressed against the outer side in the axial direction of the opening side end portion of the battery can in the configuration in which the opening of the battery can with the bottomed cylindrical shape is blocked by the sealing assembly having a function as an electrode terminal. It is thus possible to improve pressure resistance performance of the cylindrical secondary battery.

### BRIEF DESCRIPTION OF DRAWINGS

FIG. 1 is an axial sectional view of a cylindrical secondary battery according to an embodiment of the present disclosure.
FIG. 2 is an enlarged view of a portion A in FIG. 1.
FIG. 3 is an axial sectional view of a cylindrical secondary battery according to another example of the embodiment.
FIG. 4 is an expanded sectional view of a periphery of a grooved portion in FIG. 3.

### DESCRIPTION OF EMBODIMENTS

Hereinafter, an embodiment of a cylindrical secondary battery according to the present disclosure will be described in detail with reference to the drawings. Note that the cylindrical secondary battery of the present disclosure may be a battery using an aqueous electrolyte or may be a battery using a non-aqueous electrolyte. Although a non-aqueous electrolyte secondary battery (lithium ion battery) using a non-aqueous electrolyte will be exemplified below as a cylindrical secondary battery according to an embodiment, the cylindrical secondary battery of the present disclosure is not limited thereto, and the electrolyte may be an aqueous electrolyte.

Constructing new embodiments by appropriately combining characteristic parts of the embodiment and modifications described below is assumed from the beginning. In the following embodiment, the same configurations will be denoted by the same reference signs in the drawings, and repeated description will be omitted. Also, the plurality of drawings include schematic diagrams, and dimensional ratios such as lengths, widths, heights, and the like of each member in different drawings are not necessarily consistent. In the present specification, a sealing assembly 19 side in the axial direction of a cylindrical secondary battery 10 is defined as an "upper" side, while a bottom 20a side of a battery can 20 in the axial direction is defined as a "lower" side. Also, components that are not described in the independent claims presenting the highest-level concept among components described below are optional components and are not essential components. Moreover, the present disclosure is not limited to the following embodiment and the modifications thereof, and various improvements and changes can be made within the scope of the matters described in the claims of the present application and within the scope equivalent thereto.

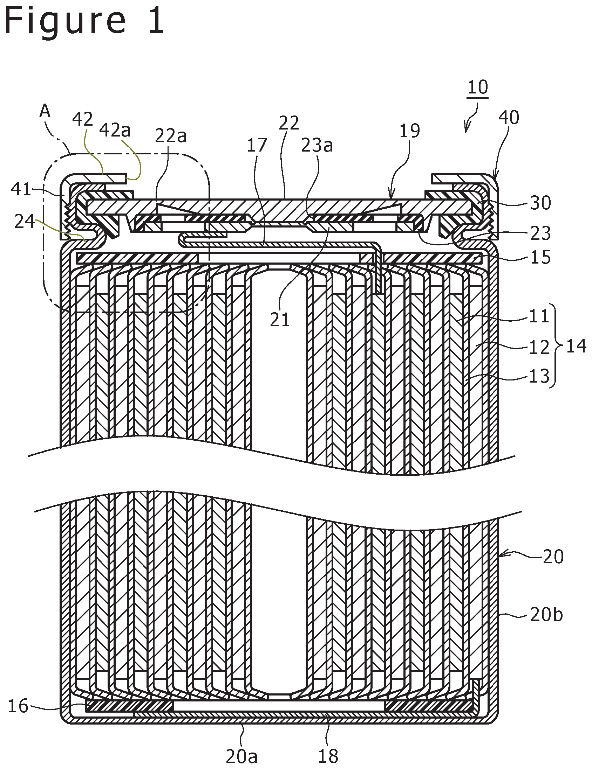

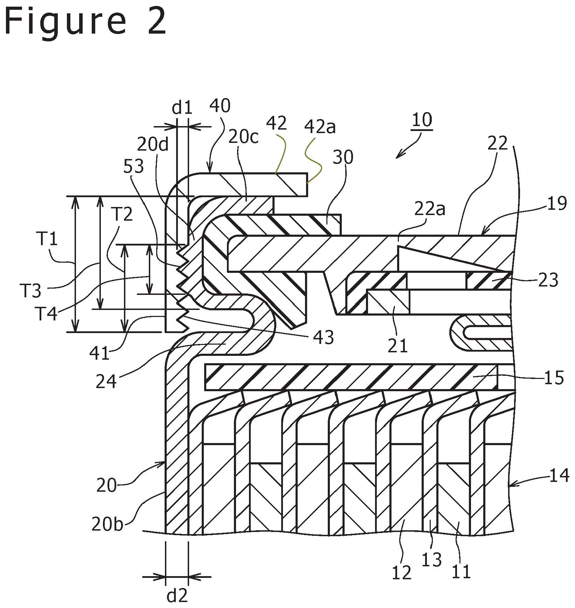

FIG. 1 illustrates an axial sectional view of the cylindrical secondary battery 10 according to an embodiment of the present disclosure. FIG. 2 is an enlarged view of a portion A in FIG. 1. The axial sectional view of FIG. 1 illustrates a section including a center axis of the cylindrical secondary battery 10. As illustrated in FIG. 1, the cylindrical secondary battery 10 includes an electrode group 14, a non-aqueous electrolyte, a battery can 20 which is a metal container with a bottomed cylindrical shape for accommodating the electrode group 14 and the non-aqueous electrolyte, a sealing assembly 19 which blocks an opening of the battery can 20, a gasket 30, and a cap 40.

The electrode group 14 includes a positive electrode 11, a negative electrode 12, and separators 13 interposed between the positive electrode 11 and the negative electrode 12 and has a wound structure in which the positive electrode 11 and the negative electrode 12 are wound via the separators 13. The battery can 20 has a bottom 20a and a tubular portion 20b.

The non-aqueous electrolyte has ion conductivity (for example, lithium ion conductivity). The non-aqueous electrolyte includes a non-aqueous solvent and an electrolyte salt dissolved in the non-aqueous solvent. The non-aqueous electrolyte is not limited to a liquid electrolyte (non-aqueous electrolyte) and may be a solid electrolyte using a gel form polymer or the like. The cylindrical secondary battery 10 is preferably a lithium ion battery. Examples of the electrolyte salt used include lithium salts such as LiBF₄ and LiPF₆. Examples of the non-aqueous solvent used include esters such as ethylene carbonate (EC), propylene carbonate (PC), dimethyl carbonate (DMC), ethyl methyl carbonate (EMC), diethyl carbonate (DEC), and methyl propionate (MP), ethers, nitriles, amides, and mixed solvents of two or more kinds of these. The non-aqueous solvent may contain a halogen-substituted product obtained by substituting at least a part of hydrogen in these solvents with a halogen atom such as fluorine.

Examples of the halogen-substituted product include fluorinated cyclic carbonate such as fluoroethylene carbonate (FEC), fluorinated chain carboxylic acid esters such as fluorinated linear carbonate ester and methyl fluoropropionate (FMP). From the viewpoint of suppressing degradation of charging/discharging cycle properties of the cylindrical secondary battery, an improvement in input properties, and the like, the non-aqueous electrolyte preferably includes 5% by mass or more of FEC and more preferably includes 5% by mass to 15% by mass of FEC with respect to the mass of the non-aqueous electrolyte.

Examples of the solid electrolyte used include polymer electrolytes in a solid form or a gel form and inorganic solid electrolytes. A polymer electrolyte includes, for example, a lithium salt and a matrix polymer, or a non-aqueous solvent, a lithium salt, and a matrix polymer. As the matrix polymer, a polymer material absorbing and gelatinizing the non-aqueous solvent, for example, is used. Examples of the polymer material used include a fluorine resin, an acrylic resin, and a polyether resin. Examples of the inorganic solid electrolyte used include known materials (for example, an oxide-based solid electrolyte, a sulfide-based solid electrolyte, and a halide-based solid electrolyte) for an all-solid-state lithium ion secondary battery and the like.

The electrode group 14 has a wound structure in which the positive electrode 11 and the negative electrode 12 are wound via the separators 13 as described above. All of the positive electrode 11, the negative electrode 12, and the separators 13 are strip-shaped elongated elements and are alternately stacked in the radial direction of the electrode group 14 by being wound in a spiral form. The negative electrode 12 is formed to have a slightly larger dimension than the positive electrode 11 in order to prevent lithium precipitation. In other words, the negative electrode 12 is formed to be longer than the positive electrode 11 in the long-side direction and the short-side direction. The separators 13 are formed to have a slightly larger dimension at least than the positive electrode 11, and for example, two separators 13 are disposed to sandwich the positive electrode 11.

The positive electrode 11 has a positive electrode core and positive electrode mixture layers provided on both surfaces of the positive electrode core. For the positive electrode core, a metal foil that is stable within a potential range of the positive electrode 11 such as aluminum or an aluminum alloy, a film with such metal disposed on a surface layer, or the like can be used. The positive electrode mixture layers include a conductive agent such as a positive electrode active material, a conductive agent such as acetylene black, and a binder such as polyvinylidene fluoride (PVDF). The positive electrode 11 can be produced by applying a positive electrode mixture slurry including the positive electrode active material, the conductive agent, the binder, and the like to the positive electrode core, drying the coating film, compressing it to form the positive electrode mixture layers on both surfaces of the positive electrode core.

As the positive electrode active material, a lithium transition metal composite oxide, for example, is used. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. One suitable example of the lithium transition metal composite oxide is a lithium metal composite oxide containing at least one of the group consisting of Ni, Co, and Mn. Specific examples thereof include a composite oxide containing Ni, Co, and Mn and a composite oxide containing Ni, Co, and Al.

The negative electrode 12 has a negative electrode core and negative electrode mixture layers provided on both surfaces of the negative electrode core. For the negative electrode core, a metal foil that is stable within a potential range of the negative electrode 12 such as copper or a copper alloy, a film with such metal disposed on a surface layer, or the like can be used. The negative electrode mixture layers include a negative electrode active material and a binder such as styrene-butadiene rubber (SBR). The negative electrode 12 can be produced by applying a negative electrode mixture slurry including the negative electrode active material, the binder, and the like to the negative electrode core, drying the coating film, and compressing it to form the negative electrode mixture layers on both surfaces of the negative electrode core.

As the negative electrode active material, graphite such as natural graphite, for example, flake graphite, lump graphite, or amorphous graphite or artificial graphite, for example, lump artificial graphite or graphitized mesophase carbon microbeads is used. As the negative electrode active material, metal that is alloyed with lithium, such as Si or Sn, an alloy containing such metal, a compound containing such metal, or the like may be used, and these may be used together with graphite. One suitable example of the active material is an Si-containing material with Si fine particles dispersed in an SiO₂ phase, a silicate phase such as lithium silicate, or an amorphous carbon phase.

Insulating plates 15 and 16 are disposed above and below the electrode group 14, respectively. In the example illustrated in FIG. 1, a positive electrode current collector 17 attached to the positive electrode 11 extends on the sealing assembly 19 side through a through-hole in the insulating plate 15, and a negative electrode current collector 18 attached to the negative electrode 12 extends on the bottom 20a side of the battery can 20 through the outside of the insulating plate 16. Each of the positive electrode current collector 17 and the negative electrode current collector 18 is formed into an elongated plate shape by a conductive material. The positive electrode current collector 17 is connected to the inner surface of the sealing assembly 19 facing the inner side of the battery can 20 through welding or the like, and the sealing assembly 19 functions as a positive electrode terminal. The negative electrode current collector 18 is connected to the inner surface of the bottom 20a of the battery can 20 through welding or the like, and the battery can 20 functions as a negative electrode terminal.

An annular gasket 30 is interposed between the battery can 20 and the sealing assembly 19 to secure sealability of the inside of the battery and an insulation property between the battery can 20 and the sealing assembly 19.

A radially bent portion 20c bent inward in the radial direction is formed over the entire periphery of the upper end portion, which is an opening side end portion, of the battery can 20, such that the sealing assembly 19 is crimped and fixed to the upper end portion of the battery can 20 via the gasket 30. In this manner, the sealing assembly 19 is fixed to the inside in the axial direction of the upper end portion of the battery can 20.

On the upper end side, which is the opening end side in the axial direction, of the tubular portion 20b of the battery can, an annular grooved portion 24 is provided on the side closer to the bottom 20a than the radially bent portion 20c. The grooved portion 24 is a part projecting inward in the radial direction over the entire periphery at a part that is adjacent, on the lower side, to an opening-side tubular portion 20d provided on the upper end side of the tubular portion 20b of the battery can 20. The grooved portion 24 is formed by denting a part of the tubular portion 20b inward in the radial direction through spinning processing, for example. The grooved portion 24 supports the sealing assembly 19, which will be described later, via the gasket 30. In FIG. 2, the outer diameter of the opening-side tubular portion 20d is smaller than the outer diameter of a part of the tubular portion 20b below the grooved portion 24. The opening-side tubular portion 20d is a part of the battery can 20 to be fitted to the inside of the cap 40, which will be described later. Note that the outer diameter of the opening-side tubular portion 20d may be the same as the outer diameter of the part of the tubular portion 20b below the grooved portion 24 or a configuration in which the opening-side tubular portion 20d has an outer diameter that is greater than the outer diameter of the part of the tubular portion 20b below the grooved portion 24 may be adopted.

For the gasket 30, an insulating resin with elasticity can be used. Examples of such a resin include polyethylene (PE), polypropylene (PP), polybutylene terephthalate (PBT), polyphenylene sulfide (PPS), perfluoroalkoxy fluoropolymer (PFA), and nylon.

The sealing assembly 19 is a disk-shaped member comprising a current blocking mechanism. The sealing assembly 19 has a structure in which an internal terminal board 21, an insulating plate 23, and a rupture disk 22 are stacked in this order from the electrode group 14 side. The internal terminal board 21 has, at its center portion, a thin portion with a thinner thickness than an outer annular portion such that the positive electrode current collector 17 is connected thereto.

The insulating plate 23 is a member that is made of an insulating material and has a disk shape having, at its center portion, an opening portion 23a. The rupture disk 22 is disposed to face the internal terminal board 21 via the insulating plate 23. The center portion of the rupture disk 22 is connected, through welding or the like, to the thin portion at the center portion of the internal terminal board 21 through the opening portion 23a of the insulating plate 23, and electrical continuity is established therebetween.

Furthermore, the rupture disk 22 has an easily breakable portion 22a at an intermediate portion in the radial direction. The easily breakable portion 22a is a ring-shaped thin portion formed by a ring-shaped groove formed in the inner surface (the lower surface in FIG. 1) of the rupture disk 22. The groove for forming the easily breakable portion 22a may be formed in the outer surface (the upper surface in FIG. 1) of the rupture disk 22. A pressure inside the battery acts on the inside of the ring-shaped groove of the rupture disk 22 through ventilation holes formed in the internal terminal board 21 and the insulating plate 23.

When the internal pressure of the battery rises and becomes greater than or equal to a second predetermined pressure, which is a predetermined threshold value as will be described later, the rupture disk 22 is deformed outward, the easily breakable portion 22a breaks, and a part located on the side further inward in the radial direction than the easily breakable portion 22a moves to be separated from the battery can 20.

In the cylindrical secondary battery 10, the internal terminal board 21 to which the positive electrode current collector 17 is connected and the rupture disk 22 are electrically connected to thereby form a current path continuing from the electrode group 14 to the rupture disk 22. If an abnormality occurs in the battery, and the internal pressure rises over a first predetermined pressure, then the internal terminal board 21 breaks, and the thin portion of the internal terminal board 21 is cut off from its outer annular portion and is then deformed to project to the outside of the battery. In this manner, the current path is disconnected. If the internal pressure of the battery further rises and becomes greater than or equal to a second predetermined pressure, which is greater than the first predetermined pressure, then the easily breakable portion 22a breaks as described above to thereby form an opening to discharge gas inside the battery. The gas discharged from the opening is discharged to the outside of the battery through an opening 42a formed in the cap 40, which will be described later.

Note that the structure of the sealing assembly 19 is not limited to the structure illustrated in FIG. 1. For example, a cap having a gas ventilation hole is superimposed on the outside of the rupture disk and is crimped and fixed along with the rupture disk to the opening side end portion of the battery can 20.

In the configuration in which the opening of the battery can 20 is blocked by the sealing assembly 19 as described above, the internal pressure may increase when an abnormality occurs in the battery in a case where an energy density is raised or the like, and it is thus desired to improve pressure resistance performance. In the present embodiment, the cap is thus attached to the opening side end portion of the battery can 20, and a pressing plate portion of the cap is pressed against the outer side in the axial direction of the upper end portion of the battery can, and the cap and the battery can 20 are screw-coupled.

Specifically, the cap 40 is attached to the upper end portion, which is the opening side end portion, of the battery can 20, and the cap 40 is pressed against the outer side in the axial direction of the upper end portion of the battery can. The cap 40 is formed of metal such as steel or an aluminum alloy and has a cylindrical tubular portion 41 and an annular plate-shaped pressing plate portion 42 that is provided to continue from one end of the tubular portion 41 and follow the radial direction toward the inner side in the radial direction and is pressed against the outer side in the axial direction of the radially bent portion 20c at the upper end portion of the battery can 20. The opening 42a for exposing the circular upper surface of the sealing assembly 19 is formed in the pressing plate portion 42.

In the present embodiment, a female screw 43 is formed on the inner circumferential surface of the tubular portion 41 of the cap 40 as illustrated in FIG. 2. The female screw 43 is screw-coupled to a male screw 53 which is formed on the battery can 20 as will be described later. The female screw 43 is formed from a lower end to an intermediate portion in the up-down direction of the inner circumferential surface of the tubular portion 41 of the cap 40. Moreover, the cap 40 is attached to the upper end portion of the battery can 20 by the battery can 20 and the cap 40 being screw-coupled between the female screw 43 and the male screw 53. According to such a cylindrical secondary battery 10, it is possible to improve pressure resistance performance in the configuration in which the opening of the battery can 20 with the bottomed cylindrical shape is blocked by the sealing assembly 19.

Specifically, if the cap 40 is screw-coupled to the battery can 20 between the male screw 53 of the battery can 20 and the female screw 43 of the cap 40, then a plurality of screw threads of the male screw 53 and a plurality of screw threads of the female screw 43 are engaged in the axial direction and the screw threads are deformed to bite into each other in the circumferential direction through fastening of the male screw 53 and the female screw 43 at the screw coupling portion. In this manner, in a case where a force to separate the battery can 20 and the cap 40 from each other in the axial direction acts, a resistance against the force increases. Therefore, it is possible to prevent the cap 40 and the sealing assembly 19 from being separated from the battery can 20 even in a case where the internal pressure of the battery rises and a force to separate the sealing assembly 19 outward in the axial direction from the battery can 20 is applied to the sealing assembly 19.

Furthermore, the sealing assembly 19 is crimped and fixed to the upper end portion of the battery can 20 via the gasket 30 by the radially bent portion 20c bent inward in the radial direction being formed at the upper end portion in the present embodiment. Moreover, the inner surface of the pressing plate portion 42 of the cap 40 is pressed against the outer surface of the radially bent portion 20c. In this manner, outward deformation of the upper end portion of the battery can 20 is suppressed by the pressing plate portion 42 of the cap 40 even in a case where the internal pressure of the battery rises and a force to push and spread the radially bent portion 20c outward in the axial direction of the battery can 20 is applied from the sealing assembly 19 side to the radially bent portion 20c as described above. Therefore, it is possible to more firmly suppress falling-off of the sealing assembly 19 from the battery can 20 and to thereby improve pressure resistance performance of the cylindrical secondary battery 10.

In a case where the internal pressure of the battery rises to the above-described second predetermined pressure or more as described above, it is possible to appropriately discharge high-pressure gas generated inside the battery through the inside of the opening 42a of the cap 40. It is possible to prevent the cap 40 and the sealing assembly 19 from unexpectedly falling off from the battery can 20 in this case as well.

The female screw 43 may be provided within a height range T2 that is greater than or equal to 50% of a height T1 of the inner circumferential surface of the tubular portion 41 of the cap 40 in the axial direction. It is thus possible to enhance coupling strength between the battery can 20 and the cap 40 at the screw coupling portion.

On the other hand, the male screw 53 is formed on the outer circumferential surface of the opening-side tubular portion 20d in the battery can 20 to be fitted into the cap 40. The male screw 53 may be provided within a height range T4 that is greater than or equal to 50% of a height T3 of the opening-side tubular portion 20d in the axial direction. This can also enhance the coupling strength between the battery can 20 and the cap 40 at the screw coupling portion. Also, in order to enhance the coupling strength between the battery can 20 and the cap 40, a configuration may be adopted in which the female screw 43 is provided within the height range T2 that is greater than or equal to 50% of the height T1 of the inner circumferential surface of the tubular portion 41 of the cap 40 in the axial direction and the male screw 53 is provided within the height range T4 that is greater than or equal to 50% of the height T3 of the opening-side tubular portion 20d in the axial direction.

In a case where the above-described cylindrical secondary battery 10 is assembled, the insulating plate 16 on the lower side, the electrode group 14, and the insulating plate 15 on the upper side are accommodated inside the tubular portion 20b of the battery can 20 in a state where the tubular portion 20b extends in the axial direction first. Thereafter, the annular grooved portion 24 with a substantially U-shaped section projecting inward in the radial direction is formed at a part of the upper end side part of the tubular portion 20b by spinning processing or the like. Then, an electrolyte is poured into the tubular portion 20b from the upper side, the sealing assembly 19 and the gasket 30 are disposed inside the tubular portion 20b and above the grooved portion 24, and the upper end portion of the tubular portion 20b is crimped inward in the radial direction over the entire periphery to thereby form the radially bent portion 20c at the upper end of the battery can 20. In this manner, the sealing assembly 19 is crimped and fixed to the upper end portion of the battery can 20 via the gasket 30. Thereafter, the cap 40 is screw-coupled to the upper end portion of the battery can 20 from the upper side, and the pressing plate portion 42 of the cap 40 is pressed against the outer side in the axial direction of the radially bent portion 20c of the battery can. In this manner, the cylindrical secondary battery 10 is formed.

According to the above-described cylindrical secondary battery 10, the cap 40 is attached through screw coupling to the opening side end portion of the battery can 20, and the pressing plate portion 42 of the cap 40 is pressed against the outer side in the axial direction of the opening side end portion of the battery can 20. It is thus possible to improve pressure resistance performance of the cylindrical secondary battery 10.

Note that although not illustrated, a crimped portion may be formed in the cap after the radially bent portion is formed by crimping at the upper end portion of the battery can in another example of the embodiment. For example, a configuration may be adopted in which in the configuration of FIGS. 1 and 2, the cap 40 is screw-coupled to the upper end portion of the battery can 20 in a state where the sealing assembly 19 is crimped and fixed to the battery can 20 by the radially bent portion 20c and the lower end portion, which is a distal end, of the cap 40 is crimped over the entire periphery on the radial direction side toward the inside of the grooved portion 24. It is thus possible to further rigidly fix the cap 40 to the battery can 20.

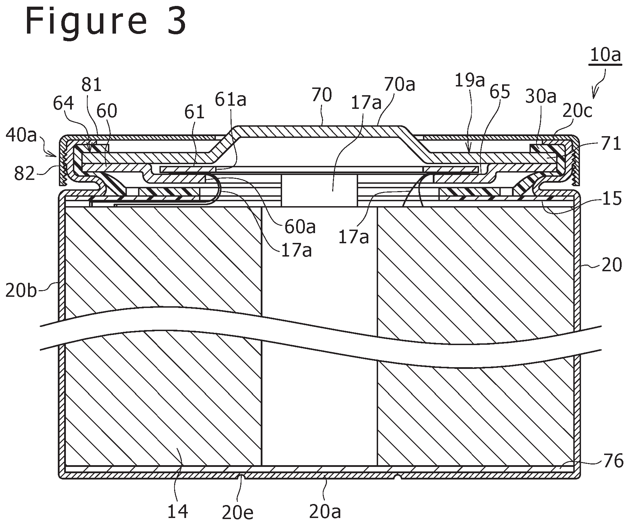

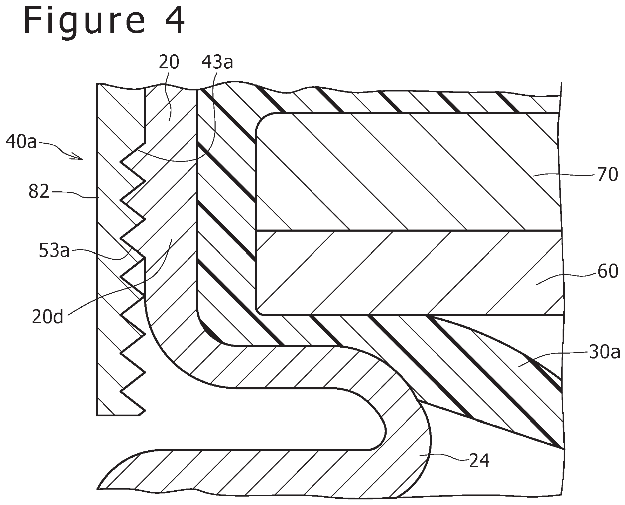

FIG. 3 is an axial sectional view of a cylindrical secondary battery 10a in another example of the embodiment. FIG. 4 is an expanded sectional view of the periphery of the grooved portion 24 in FIG. 3.

In the cylindrical secondary battery 10a of this example, a sealing assembly 19a is configured to include an upper current collecting plate 60, a terminal cap 70, and a metal plate 61. The terminal cap 70 is a plate-shaped member that is made of metal and does not have a through-hole, has a flange on the outer peripheral side, has, at its center portion, an outer circumferential surface inclined such that the diameter decreases toward the upper side, and has a hat shape having a projection with an upper end blocked.

The upper current collecting plate 60 is an annular plate member made of metal and has a through-hole 60a at an intermediate portion in the radial direction. The upper current collecting plate 60 corresponds to the positive electrode current collector. An annular recessed portion 65 is formed on the inner side in the radial direction in the upper surface of the upper current collecting plate 60. A lower surface of the flange of the terminal cap 70 is electrically connected to the outer side in the radial direction of the upper surface of the upper current collecting plate 60 through laser welding, for example. In this manner, the sealing assembly 19a has, at an outer peripheral edge portion, a stacked portion 64 in which the terminal cap 70 and the upper current collecting plate 60 are stacked. The outer peripheral edge portion is crimped and fixed to the upper end portion of the battery can 20 via a gasket 30a as will be described later.

Also, an upper end of the projection of the terminal cap 70 projects upward through an opening provided at the center portion of a cap 40a, which will be described later, and is exposed to the outside. The exposed part of the upper end surface of the terminal cap 70 constitutes a positive electrode terminal.

The metal plate 61 is an annular member made of metal and has a through-hole 61a configured by a cylindrical hole. The metal plate 61 is disposed between the lower surface of the flange of the terminal cap 70 and the upper surface of the recessed portion 65 of the upper current collecting plate 60.

Also, a plurality of (for example, eight) positive electrode leads 17a are connected at a plurality of positions (for example, eight positions) in the long-side direction corresponding to the winding direction of the positive electrode 11 (see FIG. 1), and the plurality of positive electrode leads 17a are derived upward from the upper end of the electrode group 14. FIG. 3 provides simplified illustration of the electrode group 14.

The upper end portions of the plurality of positive electrode leads 17a are derived upward through the through-hole of the insulating plate 15 on the upper side, and a part of the upper end of each positive electrode lead 17a bent outward in the radial direction is sandwiched between the upper surface of the recessed portion 65 of the upper current collecting plate 60 and the metal plate 61. In this state, each positive electrode lead 17a is joined to the upper surface of the upper current collecting plate 60. The upper current collecting plate 60 and the metal plate 61 are also joined, and each positive electrode lead 17a and the metal plate 61 are also joined. Such joining can be realized by irradiating the metal plate 61 with laser light in the axial direction from the upper side and performing laser welding in a state where the distal end portion of each positive electrode lead 17a is sandwiched between the upper current collecting plate 60 and the metal plate 61, for example. It is possible to reliably and easily weld and join the positive electrode leads 17a to the upper current collecting plate 60 by performing laser welding in the state where the distal end portions of the positive electrode leads 17a are sandwiched between the upper current collecting plate 60 and the metal plate 61.

The upper current collecting plate 60 may not be joined to the metal plate 61, and the positive electrode leads 17a may not be joined to the metal plate 61. Also, the cylindrical secondary battery may not have the metal plate 61, and the positive electrode leads 17a may be joined to the upper current collecting plate 60. Moreover, the positive electrode leads 17a may be joined to the lower surface of the upper current collecting plate 60.

The negative electrode 12 (see FIG. 1) is connected to the bottom 20a of the battery can 20 via a negative electrode current collector 76. Specifically, the negative electrode current collector 76 which is a plate-shaped member made of metal is disposed on the upper surface of the bottom 20a. The lower end portion of the negative electrode 12 is provided with a strip-shaped negative electrode core exposed portion (not illustrated) from an end on the winding start side to an end on the winding end side in the long-side direction. In a state where a part of the negative electrode core exposed portion derived on the side further downward than the lower ends of the positive electrode 11 and the separators 13 (see FIG. 1) in the electrode group 14 has fallen down inward in the radial direction, the electrode group 14 is pressed against the upper surface of the negative electrode current collector 76. The negative electrode core exposed portion is joined to the upper surface of the negative electrode current collector 76 through laser welding by performing laser light irradiation from the lower surface side of the negative electrode current collector 76 in this state. Also, the negative electrode current collector 76 is joined to the bottom 20a through laser welding by performing laser light irradiation or the like from the lower side of the bottom 20a of the battery can 20.

The cylindrical secondary battery 10a has a thin easily breakable portion 20e at the bottom 20a of the battery can 20. The easily breakable portion 20e is formed by engraving a circular or C shape on the lower surface of the bottom 20a, for example. If the bottom 20a is provided with the easily breakable portion 20e, it is possible to discharge high-temperature gas inside the cylindrical secondary battery 10a to the outside by the easily breakable portion 20e breaking when abnormal heat generation occurs in the cylindrical secondary battery 10a. The thin easily breakable portion may be provided in the terminal cap 70.

Furthermore, the outer peripheral edge portion of the sealing assembly 19a is crimped and fixed to the upper end portion of the battery can 20 via the gasket 30a by the radially bent portion 20c bent inward in the radial direction being formed at the upper end portion.

Also, the cap 40a is attached through screw-coupling to the upper end portion of the battery can 20. The cap 40a has an annular plate-shaped pressing plate portion 81 that is provided to continue from the upper end of the tubular portion 82 and follow the radial direction toward the inner side in the radial direction and is pressed against the outer side in the axial direction of the radially bent portion 20c at the upper end portion of the battery can 20. In this example, the pressing plate portion 81 extends inward in the radial direction from the inner end of the radially bent portion 20c in the radial direction up to a location near the outer circumferential surface of the projection of the terminal cap 70. The cap 40a is screw-coupled to the battery can 20 between a female screw 43a (FIG. 4) provided on the inner circumferential surface of the tubular portion 82 of the cap 40a and a male screw 53a (FIG. 4) provided on the outer circumferential surface of the opening-side tubular portion 20d of the battery can 20.

In a case where a battery module is configured by electrically connecting a plurality of cylindrical secondary batteries 10a, external leads, which are not illustrated, for example, are joined to the pressing plate portion 81 of the cap 40a as a negative electrode terminal and the upper surface of the projection of the terminal cap 70 as a positive electrode terminal. In this example, the pressing plate portion 81 extends up to a side further inward in the radial direction than the radially bent portion 20c of the battery can 20. In this manner, in the case where the battery module is configured by electrically connecting the plurality of cylindrical secondary batteries 10a, the external lead and the negative electrode terminal can be easily joined as compared with a case where the cap 40a is not used and the radially bent portion 20c is caused to function as a negative electrode terminal. In this example, other configurations and effects are similar to those of the configuration in FIGS. 1 and 2.

Note that although the configuration in which the sealing assemblies 19 and 19a are crimped and fixed to the upper end portion of the battery can 20 has been described in each of the above embodiments, the sealing assemblies 19 and 19a may be fixed to the battery can 20 by a method other than the crimping fixation as long as it is possible to fix the sealing assemblies 19 and 19a to the inner side in the axial direction of the upper end portion of the battery can 20.

In the configuration in each of the above embodiment, the case where the male screws 53 and 53a are provided on the outer circumferential surface of the opening-side tubular portion 20d of the battery can 20 has been described. On the other hand, a configuration may be adopted in which the height of the tubular portion of the cap 40 illustrated in FIGS. 1 and 2 in the axial direction is increased as compared with that in the configuration in FIGS. 1 and 2, the inner diameter and the outer diameter of the tubular portion are increased, and the battery can 20 and the cap 40 are screw-coupled between a female screw formed on the inner circumferential surface of the tubular portion and a male screw formed on the outer circumferential surface of a part on the side further downward than the grooved portion 24 at the tubular portion 20b of the battery can 20.

In the configuration of the present disclosure, the pressing plate portion of the cap is not limited to the annular plate-shaped part, and a configuration may be adopted in which an opening to connect an external lead to the sealing assemblies 19 and 19a is formed at a part of a disk-shaped plate portion, for example.

### REFERENCE SIGNS LIST

10, 10a Cylindrical secondary battery, 11 Positive electrode, 12 Negative electrode, 13 Separator, 14 Electrode group, 15, 16 Insulating plate, 17 Positive electrode current collector, 17a Positive electrode lead, 18 Negative electrode current collector, 19, 19a Sealing assembly, 20 Battery can, 20a Bottom, 20b Tubular portion, 20c Radially bent portion, 20d Opening-side tubular portion, 20e Easily breakable portion, 21 Internal terminal board, 22 Rupture disk, 22a Easily breakable portion, 23 Insulating plate, 24 Grooved portion, 30, 30a Gasket, 40, 40a Cap, 41 Tubular portion, 42 Pressing plate portion, 42a Opening, 43 Female screw, 60 Upper current collecting plate, 61 Metal plate, 61a Through-hole, 64 Stacked portion, 65 Recessed portion, 70 Terminal cap, 76 Negative electrode current collector, 81 Pressing plate portion, 82 Tubular portion

## Claims

1. A cylindrical secondary battery, comprising:
an electrode group in which a positive electrode and a negative electrode are wound via separators;
a current collector that is connected to the electrode group;
a sealing assembly that is disposed above the electrode group, the current collector being connected to the sealing assembly, the sealing assembly having a function as an electrode terminal; and
a battery can with a bottomed cylindrical shape that accommodates the electrode group, wherein
the sealing assembly is fixed to an inner side in an axial direction of an opening side end portion of the battery can and blocks an opening of the battery can,
a cap is attached to the opening side end portion of the battery can,
the cap has a tubular portion that has a female screw on an inner circumferential surface and a pressing plate portion that continues from one end of the tubular portion and is pressed against an outer side in the axial direction of the opening side end portion of the battery can,
the battery can has a male screw on an outer circumferential surface, and
the battery can and the cap are screw-coupled between the female screw and the male screw.

2. The cylindrical secondary battery according to claim 1, wherein the female screw is provided within a height range that is greater than or equal to 50% of a height of the inner circumferential surface of the tubular portion in the axial direction.

3. The cylindrical secondary battery according to claim 1 or 2, wherein the sealing assembly is crimped and fixed to the opening side end portion via a gasket by a radially bent portion bent inward in a radial direction being formed at the opening side end portion of the battery can.
